(19) Europäisches Patentamt / European Patent Office / Office européen des brevets

(11) **EP 4 301 916 B1**

(12) **FASCICULE DE BREVET EUROPEEN**

(45) Date de publication et mention
de la délivrance du brevet:
**16.04.2025 Bulletin 2025/16**

(21) Numéro de dépôt: **22710135.9**

(22) Date de dépôt: **24.02.2022**

(51) Classification Internationale des Brevets (IPC):
**D03D 1/00** *(2006.01)* **D03D 13/00** *(2006.01)*
**D03D 11/00** *(2006.01)* **D03D 25/00** *(2006.01)*
**B29B 11/16** *(2006.01)*

(52) Classification Coopérative des Brevets (CPC):
**D03D 1/00; B29B 11/16; D03D 11/00;
D03D 13/004; D03D 25/005;** D10B 2505/02

(86) Numéro de dépôt international:
**PCT/FR2022/050343**

(87) Numéro de publication internationale:
**WO 2022/184999 (09.09.2022 Gazette 2022/36)**

(54) **PROCEDE DE TISSAGE TRIDIMENSIONNEL OU MULTICOUCHE D'UNE STRUCTURE FIBREUSE ET STRUCTURE FIBREUSE PRESENTANT UN TISSAGE TRIDIMENSIONNEL OU MULTICOUCHE**

VERFAHREN ZUM DREIDIMENSIONALEN ODER MEHRLAGIGEN WEBEN EINER FASERSTRUKTUR UND FASERSTRUKTUR MIT EINEM DREIDIMENSIONALEN ODER MEHRLAGIGEN GEWEBE

METHOD FOR THE THREE-DIMENSIONAL OR MULTILAYER WEAVING OF A FIBROUS STRUCTURE, AND FIBROUS STRUCTURE HAVING A THREE-DIMENSIONAL OR MULTILAYER WEAVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2021 FR 2102053**

(43) Date de publication de la demande:
**10.01.2024 Bulletin 2024/02**

(73) Titulaire: **SAFRAN
75015 Paris (FR)**

(72) Inventeurs:
• **COUPE, Dominique Marie Christian
77550 MOISSY-CRAMAYEL (FR)**
• **KRIBS, Célline
77550 MOISSY-CRAMAYEL (FR)**
• **RETIVEAU-LECA, Adrienne
77550 MOISSY-CRAMAYEL (FR)**

(74) Mandataire: **Cabinet Beau de Loménie
158, rue de l'Université
75340 Paris Cedex 07 (FR)**

(56) Documents cités:
**US-A1- 2005 084 377 US-B2- 9 597 841**

**Description**

Domaine Technique

La présente invention concerne la réalisation de pièces en matériau composite et plus particulièrement la réalisation par tissage tridimensionnel (3D) ou multicouche de structures fibreuses de renfort pour de telles pièces.

Technique antérieure

Un domaine d'application de l'invention est la réalisation de pièces en matériau composite structural, c'est-à-dire des pièces de structure à renfort fibreux et densifié par une matrice. Les matériaux composites permettent de réaliser des pièces ayant une masse globale moins élevée que ces mêmes pièces lorsqu'elles sont réalisées en matériau métallique.

Le tissage 3D ou multicouche de structures fibreuses destinées à constituer le renfort fibreux d'une pièce en matériau composite, telle qu'une aube de moteur aéronautique par exemple, est réalisé dans un métier à tisser de type Jacquard, le tissage consistant à insérer des fils de trame, en créant un motif, entre des fils de chaîne. Les fils de chaîne sont organisés au niveau du harnais du métier à tisser en une pluralité de couches et de colonnes qui sont manipulées par le métier à tisser afin de permettre l'insertion des fils de trames suivant le ou les motifs de tissage programmés dans le métier à tisser. Les fils de trame sont insérés entre les fils de chaîne par colonne. Le document US 2005/084377 décrit la réalisation par tissage tridimensionnel d'une préforme fibreuse destinée à la fabrication d'une aube de turbine en matériau composite.

Afin de permettre l'introduction de chaque colonne de fils de trame lors du tissage de la structure fibreuse, un système d'appel des fils de chaîne est associé au métier à tisser. Ce système, placé en aval du métier à tisser, a pour rôle de maintenir tous les fils de chaîne ensemble dans un dispositif de bridage ou clampage et de permettre l'avancé des fils de chaîne d'une distance déterminée après l'insertion de chaque colonne de trame.

Ainsi le dispositif de bridage des fils de chaîne en amont du métier à tisser est nécessaire au début d'un nouveau tissage d'une structure fibreuse. A la fin du tissage, la structure fibreuse est libérée du dispositif de bridage.

Après tissage, la structure fibreuse présente une portion lâche sans cohésion correspondant à la partie de la structure fibreuse tissée en premier et située au plus près du dispositif de bridage. Dans cette portion, les premières colonnes de trame tissées sont en contact avec une zone uniquement constituées de chaines sans entrelacement. La densité du tissu réalisé en aval a alors tendance à repousser ces premières colonnes en direction du système de bridage, l'absence d'entrelacement facilitant ce glissement.

Par conséquent, la structure fibreuse présente une portion s'étendant sur une longueur non négligeable qui ne peut pas être conservée pour former le renfort fibreux de la pièce à fabriquer car l'espacement entre les colonnes de trame n'est pas maîtrisé. En effet, le taux volumique de fibres dans une pièce en matériau composite est un paramètre important pour les propriétés mécaniques de la pièce, ce taux étant déterminé par l'armure de tissage et la maîtrise de l'espacement entre les colonnes de fils. Ce manque de contrôle en début de tissage entraîne une perte matière importante qui augmente à la fois le temps de tissage et le coût de fabrication de la structure fibreuse.

Il est donc souhaitable de pouvoir disposer de structures fibreuses 3D ou multicouches ne présentant pas les inconvénients précités.

Exposé de l'invention

A cet effet, l'invention propose, selon un premier objet, un procédé de tissage d'une structure fibreuse selon la revendication 1.

La première portion constitue ainsi une portion dite « bloc de départ » (ou « back stop ») qui, grâce à son taux d'entrelacement élevé, empêche le glissement des fils de trame tissés ensuite dans la deuxième portion. Les espaces entre les colonnes de trame sont ainsi maîtrisés dès le début du tissage de la deuxième portion, ce qui permet d'obtenir immédiatement une structure fibreuse qui respecte l'armure de tissage définie et d'éviter, par conséquent, beaucoup moins de perte de matière qu'avec la technique de tissage de l'art antérieur.

Selon un aspect particulier du procédé de l'invention, les fils de chaîne et les fils de trame présents dans la première armure de tissage présentent un taux d'entrelacement supérieur ou égale à 1,5 fois le taux d'entrelacement des fils de chaîne et des fils de trame présents dans la deuxième armure de tissage.

Selon un autre aspect du procédé de l'invention, les première et deuxième armures sont du même type.

Selon un autre aspect particulier du procédé de l'invention, les première et deuxième armures sont d'un type différent.

Selon un autre aspect particulier du procédé de l'invention, le type des première et deuxième armures est choisi parmi un des types suivants : interlock, 3D orthogonal, multitoile, multisergé, multisatin.

Selon un autre aspect particulier du procédé de l'invention, la première armure de tissage s'étend sur au moins 4 colonnes de trame colonnes de fils de trames consécutives.

L'invention a également pour objet un procédé de fabrication d'une pièce en matériau composite comprenant les étapes suivantes:

- réalisation d'une structure fibreuse conformément au procédé de tissage d'une structure fibreuse selon l'invention,

- retrait de la première portion de la structure fibreuse,
- mise en forme de la structure fibreuse pour former une préforme fibreuse de la pièce à fabriquer,
- densification de la préforme fibreuse.

L'invention a encore pour objet une structure fibreuse selon la revendication 8.

Selon un aspect particulier de la structure fibreuse de l'invention, les fils de chaîne et les fils de trame présents dans la première armure de tissage présentent un taux d'entrelacement supérieur ou égale à 1,5 fois le taux d'entrelacement des fils de chaîne et des fils de trame présents dans la deuxième armure de tissage.

Selon un autre aspect particulier de la structure fibreuse de l'invention, les première et deuxième armures sont du même type.

Selon un autre aspect particulier de la structure fibreuse de l'invention, les première et deuxième armures sont d'un type différent.

Selon un autre aspect particulier de la structure fibreuse de l'invention, le type des première et deuxième armures est choisi parmi un des types suivants : interlock, 3D orthogonal, multitoile, multisergé, multisatin.

Selon un autre aspect particulier de la structure fibreuse de l'invention, la première armure de tissage s'étend sur au moins 4 colonnes de trame colonnes de fils de trames consécutives.

Brève description des dessins

[Fig. 1] La figure 1 est une vue schématique en perspective d'un métier à tisser pour la mise en œuvre du procédé de tissage de l'invention,
[Fig. 2] La figure 2 est une vue en coupe de trame en sens chaîne d'une structure fibreuse conformément à un mode de réalisation de l'invention,
[Fig. 3] La figure 3 est une vue en coupe partielle en sens chaîne à échelle agrandie d'une portion de la structure fibreuse de la figure 2,
[Fig. 4] La figure 4 est une vue en coupe partielle en sens chaîne à échelle agrandie d'une autre portion de la structure fibreuse de la figure 2 présentant un taux d'entrelacement supérieur à celui du reste de la structure fibreuse.

Description des modes de réalisation

L'invention s'applique d'une manière générale à toutes structures fibreuses formées par tissage tridimensionnel ou multicouche qui sont aptes à constituer des renforts fibreux, ou préformes, pour la fabrication des aubes de turbomachine, les aubes étant obtenues par densification des structures fibreuses par une matrice. La matrice est typiquement une résine, dans le cas de matériaux composites utilisés à température relativement peu élevée, typiquement jusqu'à 300°C, ou un matériau réfractaire tel que du carbone ou céramique dans le cas de composites thermostructuraux.

Par "tissage tridimensionnel" ou "tissage 3D", on entend ici un mode de tissage par lequel certains au moins des fils de chaîne lient des fils de trame sur plusieurs couches de trame.

Par "tissage multicouche", on désigne ici un tissage 3D avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

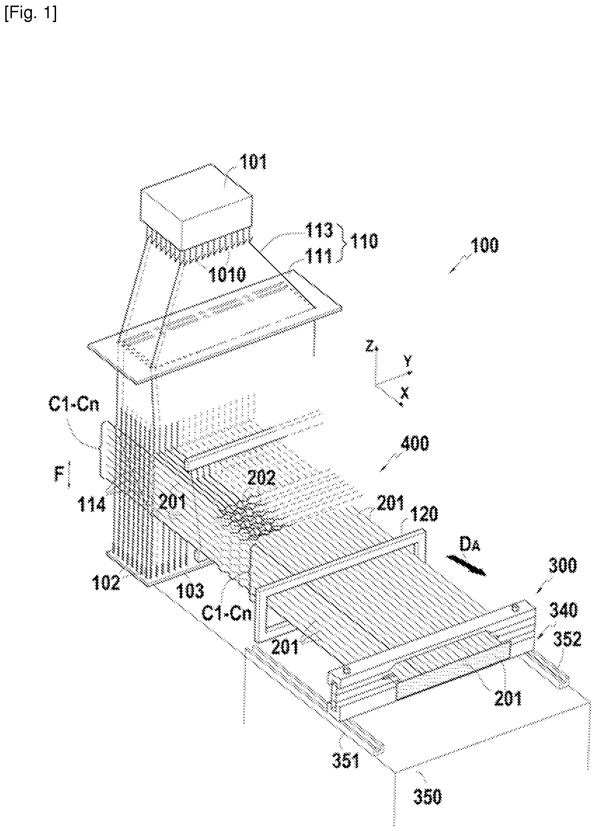

La figure 1 illustre un métier à tisser 100 équipé d'une mécanique Jacquard 101 supportée par une superstructure non représentée sur la figure 1. Le métier 100 comprend également un harnais 110 constitué d'une planche d'empoutage 111 et des fils de commande ou lisses 113, chaque lisse 113 étant reliée à une extrémité à un crochet de commande 1010 de la mécanique Jacquard 101 et à l'autre extrémité à un des ressorts de rappel 102 fixés au bâti 103 du métier à tisser 100. Chaque lisse 113 comprend un œillet 114 traversé par un fil de chaîne 201. Les lisses 113 et leur œillet 114 associé s'étendent dans une zone dans laquelle les lisses 113 et les œillets 114 sont animés d'un mouvement d'oscillation sensiblement vertical représenté par la double flèche F. Les lisses 113 sont soumises à des efforts de traction respectivement exercés par les crochets de commande 1010 et par les ressorts de rappel 102. Les lisses 113 permettent de soulever certains fils de chaîne 201 suivant un programme de tissage défini. En soulevant certains fils de chaîne 201, les lisses 113 créent ainsi une foule permettant l'introduction de fils de trame 202 pour le tissage 3D ou multicouche des structures fibreuses. Les fils de chaîne 201 sont organisés en une pluralité de couches de fils de chaîne $C_1$ à $C_n$.

Les fils de chaîne 201 sont appelés depuis des bobines disposées sur un cantre (non représenté sur la figure 1) en amont de la mécanique Jacquard 101 du métier à tisser 100. A cet effet, comme illustré sur la figure 1, un système d'appel de fils de chaîne 300 est associé au métier à tisser 100 en aval de celui-ci. Le cadre 120 délimite la sortie du métier à tisser 100, c'est-à-dire la zone à partir de laquelle les fils de chaîne 201 ne sont plus tissés avec les fils de trame 202. Le système d'appel de fils de chaîne 300 comprend un dispositif de bridage 340 destiné à maintenir par serrage un ensemble de couches $C_1$ à $C_n$ de fils de chaines en aval du métier à tisser 100.

Pendant le tissage d'une structure fibreuse 400, les fils de chaîne 201 sont entraînés dans la direction d'avance $D_A$ par le dispositif de bridage. Plus précisément, dans l'exemple décrit ici, le dispositif de bridage 340 est monté sur des rails 351 et 352 d'un bâti 350 du système d'appel de fils de chaîne 300 de manière à permettre le déplacement du dispositif de bridage. Le déplacement du dispositif de bridage 300 est réalisé par un moteur, par exemple un moteur pas-à-pas (non représenté sur la figure 1). A chaque fois qu'une colonne de fils de trame 202 est entièrement tissée avec les couches de fils de chaîne $C_1$ à $C_n$, le dispositif de bridage 340 est entraîné dans la direction $D_A$ sur une distance permettant l'insertion et le tissage dans le métier 100 de la colonne de trame suivante.

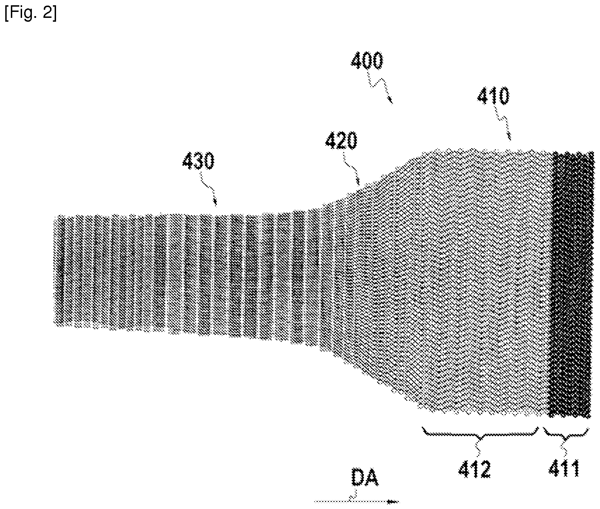

La figure 2 illustre une structure fibreuse 400 tissée en une seule pièce par tissage tridimensionnel. La partie de la structure fibreuse 400 représentée sur la figure 2 correspond à une préforme de pied d'aube 410 prolongée par une préforme d'échasse d'aube 420 d'un renfort fibreux d'aube de turbine en matériau composite suivie d'une partie de préforme de pale ou de profil aérodynamique 430.

Dans l'exemple décrit ici, la structure fibreuse 400 est tissée suivant un tissage 3D à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure. Un exemple détaillé de réalisation d'une préforme fibreuse destinée à former le renfort fibreux d'une aube pour moteur aéronautique à partir d'une ébauche fibreuse tissée 3D est notamment décrit en détails dans les documents US 7 101 154, US 7 241 112 et WO 2010/061140.

La préforme de pied d'aube 410 correspond à la première partie tissée d'une préforme d'aube (i.e. première partie tissée qui sort du métier à tisser), la préforme d'échasse 420 et la partie de préforme de pale ou de profil aérodynamique 430 étant tissées ensuite dans le prolongement de la préforme de pied d'aube 410.

Conformément à l'invention, la structure fibreuse 400 présente au début de la préforme de pied d'aube 410 une première portion 411 dont l'armure de tissage présente un taux d'entrelacement des fils de chaîne et des fils de trame supérieur au taux d'entrelacement des fils de chaîne et des fils de trame présenté par l'armure de tissage dans une deuxième portion de tissage 412 située en aval de la première portion de tissage suivant la direction $D_A$ correspondant à la direction d'avancement de la structure fibreuse en sortie du métier à tisser.

Le taux d'entrelacement des fils de chaîne et des fils de trame dans un tissu tridimensionnel peut être calculé avec la formule suivante :

$$T_E = N_{CT}/(R_A \times E_T \times E_C)$$

où :

- $T_E$ correspond au taux d'entrelacement entre des fils de chaîne et des fils de trame dans un tissu tridimensionnel,

- $N_{CT}$ correspond au nombre de couches de fils traversées par les fils de chaîne et/ou les fils de trame,

- $R_A$ correspond au rapport d'armure, c'est-à-dire le nombre de colonnes de trame sur lequel le motif du tissage de l'armure se répète,

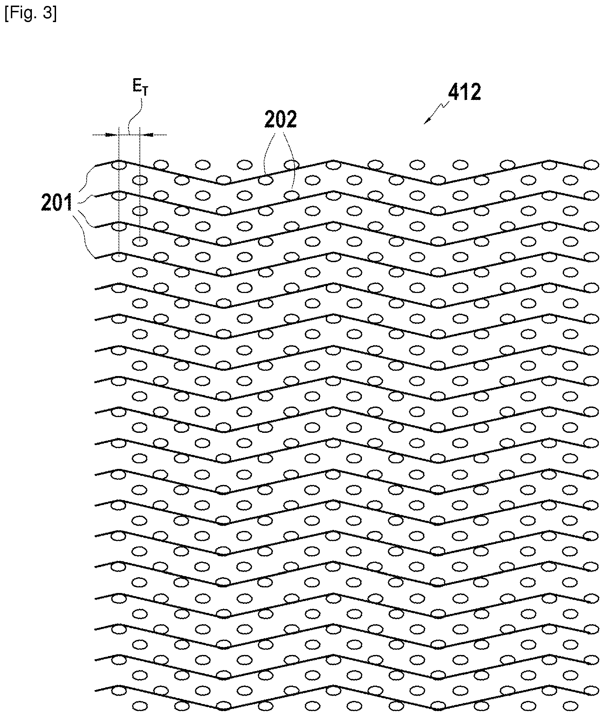

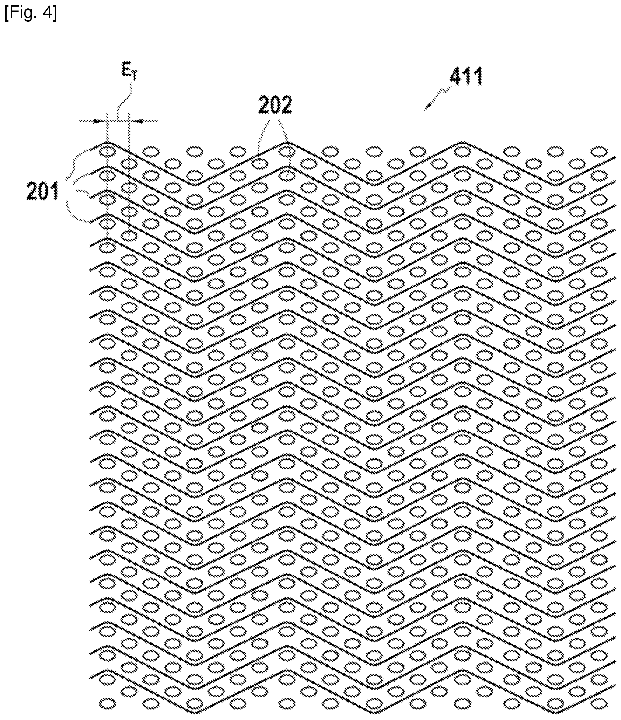

- $E_T$ correspond à l'espacement entre deux colonnes de trame qui peut être aussi défini comme la contexture trame (figures 3 et 4),

- $E_c$ correspond à l'espacement entre colonnes de chaîne qui peut être aussi défini comme la contexture chaîne (comme montré pour $E_T$ sur les figures 3 et 4).

La figure 3 est une vue partielle agrandie d'un plan en coupe trame de l'armure de tissage de la deuxième portion de tissage 412 obtenue par tissage 3D entre les fils de chaîne 201 et les fils de trame 202 suivant une armure interlock. Dans cet exemple, le nombre $N_{CT}$ de couches de fils de trame traversées par les fils de chaîne est de 2, le rapport d'armure $R_A$ est de 10 (colonnes de trame), l'espacement $E_T$ entre deux colonnes de trame est de 2 mm et l'espacement $E_c$ (non représenté sur la figure 3) entre deux colonnes de chaîne est de 3 mm. Par conséquent, le taux d'entrelacement $T_E$ est ici de :

$$T_E = 2/(10 \times 2 \times 3) = 0{,}033.$$

La figure 4 est une vue partielle agrandie d'un plan en coupe trame de l'armure de tissage de la première portion de tissage 411 obtenue par tissage 3D entre les fils de chaîne 201 et les fils de trame 202. Dans cet exemple, le nombre $N_{CT}$ de couches de fils de trame traversées par les fils de chaîne est de 3, le rapport d'armure $R_A$ est de 8 (colonnes de trame), l'espacement $E_T$ entre deux colonnes de trame est de 2 mm et l'espacement $E_c$ (non représenté sur la figure 4) entre deux colonnes de chaîne est de 3 mm. Par conséquent, le taux d'entrelacement $T_E$ est ici de :

$$T_E = 3/(8 \times 2 \times 3) = 0{,}0625.$$

Par conséquent, la première portion 411 présente un taux d'entrelacement bien plus important que celui de la portion 412 correspondant au reste de la structure fibreuse.

La première portion 411 constitue ainsi une portion dite « bloc de départ » (ou « back stop ») qui, grâce à son taux d'entrelacement élevé, empêche le glissement des fils de trame tissés ensuite dans la deuxième portion 412. Les espaces entre les colonnes de trame (contexture trame) sont ainsi maîtrisés dès le début du tissage de la deuxième portion 412, ce qui permet d'obtenir immédiatement une structure fibreuse qui respecte l'armure de tissage définie et d'éviter, par conséquent, beaucoup moins de perte de matière qu'avec la technique de tissage de l'art antérieur.

Dans la structure fibreuse de l'invention, la seule partie sacrificielle, c'est-à-dire la partie de la structure fibreuse qui sera retirée du renfort fibreux constitutif de la pièce en matériau composite à réaliser, correspond à la première portion à fort taux d'entrelacement.

L'armure de tissage utilisée dans les première et deuxième portions de la structure fibreuse peut être du même type, comme une armure de type interlock illustrée dans les figures 3 et 4 mais avec un taux d'entrelacement différent entre les deux portions. Selon une variante, l'armure de tissage utilisé dans la première portion peut être d'un type différent de l'armure utilisée dans la deuxième portion, par exemple dans le cas où l'armure utilisée dans la deuxième portion ne peut être reprise dans la première portion avec un taux d'entrelacement plus élevé.

A titre d'exemples non limitatifs, le type d'armure utilisé pour former la première portion et/ou la deuxième portion peut être choisi parmi un des types suivants : interlock, 3D orthogonal, multitoile, multisergé multisatin.

Par ailleurs, les portions de la structure fibreuse selon l'invention peuvent chacun combiner des types d'armures différents. En effet, par exemple, il peut être avantageux de favoriser l'obtention, après densification, d'un état de surface exempt d'irrégularités importantes, c'est-à-dire un bon état de finition pour éviter ou limiter des opérations de finition par usinage ou pour éviter la formation d'amas de résine dans le cas de composites à matrice résine. A cet effet, dans le cas d'une structure fibreuse ayant une partie interne, ou cœur, et une partie externe, ou surface extérieure de la structure fibreuse, la surface est réalisée de préférence par tissage avec une armure de type toile, satin ou sergé afin de limiter les irrégularités de surface, une armure de type satin procurant en outre un aspect de surface lisse.

Il peut être souhaitable d'utiliser des fils de natures chimiques différentes entre différentes parties de la structure fibreuse, notamment entre cœur et peau pour conférer des propriétés particulières à la pièce en matériau composite obtenue, notamment en termes de résistance à l'oxydation ou à l'usure.

Ainsi, dans le cas d'une pièce en matériau composite thermostructural à renfort de fibres réfractaires, on pourra utiliser une structure fibreuse avec des fibres de carbone dans le cœur et des fibres en céramique, par exemple en carbure de silicium (SiC), en surface afin d'accroître la résistance à l'usure et à l'oxydation de la pièce composite au niveau de cette partie de surface.

Selon une caractéristique particulière de l'invention, la portion de la structure fibreuse tissée avec un taux d'entrelacement supérieur au taux d'entrelacement de la ou les portions de la texture fibreuse tissées en amont de la première portion de tissage s'étend (suivant la direction d'avancement de la structure fibreuse en sortie du métier à tisser) sur au moins 4 colonnes consécutives de trame.

Selon une autre caractéristique particulière de l'invention, les fils de chaîne et les fils de trame présents dans la première armure de tissage présentent un taux d'entrelacement supérieur ou égale à 1,5 fois le taux d'entrelacement des fils de chaîne et des fils de trame présents dans la deuxième armure de tissage.

Une fois la structure fibreuse tissée, la première portion 411 présentant un taux d'entrelacement élevé est retirée. Selon une variante de mise en œuvre, la première portion 411 peut être retirée à un stade ultérieur de la fabrication de la pièce en matériau composite comme par exemple après densification par usinage. La structure fibreuse est alors mise en forme par compactage pour former une préforme fibreuse prête à être densifiée. On procède ensuite à la densification de la préforme fibreuse afin de former une pièce en matériau composite, par exemple une aube. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou le procédé d'injection de charge céramique (Slurry Cast) ou le procédé d'imprégnation d'un alliage de silicium (MI ou RMI) ou encore suivant un enchaînement d'un ou plusieurs de ces procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC ou SiCN, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injectée la résine et les orifices d'évacuation de cette dernière afin de contrôler et d'optimiser l'imprégnation de la préforme par la résine.

La densification de la préforme peut encore être réalisée par imprégnation de polymère et pyrolyse (PIP), ou par imprégnation d'une barbotine (« slurry cast »), contenant par exemple du SiC et des liants organiques, suivie d'une infiltration avec du silicium liquide (« Melt infiltration »).

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au cœur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Deposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en œuvre, limiter les coûts et les cycles de fabrication tout en obtenant des caractéristiques satisfaisantes pour l'utilisation envisagée.

Les procédés de densification décrits ci-avant permettent de réaliser, à partir de la structure fibreuse de l'invention, principalement des pièces en matériau composite à matrice organique (CMO), à matrice carbone (C/C) et à matrice céramique (CMC).

Dans le cas de la réalisation d'une pièce en matériau composite oxyde/oxyde, la structure fibreuse est imprégnée avec une barbotine chargée de particules d'oxyde réfractaire. Après élimination de la phase liquide de la barbotine, la préforme ainsi obtenue est soumise à un traitement thermique afin de fritter les particules et obtenir une matrice d'oxyde réfractaire. L'imprégnation de la structure peut être réalisée avec des procédés utilisant un gradient de pression, comme les procédés de type moulage par injection dits « RTM » ou aspiration de poudre submicronique dits « APS ».

Après densification, on obtient une pièce en matériau composite.

La structure fibreuse et son procédé de fabrication selon la présente invention sont utilisés pour réaliser des aubes de turbomachine, telles que des aubes rotoriques de turbine, des aubes de soufflantes, des hélices, des pièces de train d'atterrissage des secteurs d'aube pour des distributeurs ou redresseurs de turbine à gaz.

## Revendications

1. Procédé de tissage d'une structure fibreuse (400) destinée à former le renfort fibreux d'une aube de turbomachine en matériau composite comprenant un renfort fibreux densifié par une matrice, la structure fibreuse étant tissée en une seule pièce dans un métier à tisser par tissage tridimensionnel ou multicouche entre une pluralité de couches de fils de chaîne (201) et une pluralité de couches de fils de trame (202), la structure fibreuse comprenant une préforme de pied d'aube (410), **caractérisé en ce qu'**il comprend au moins une première étape de tissage dans laquelle les fils de chaîne et les fils de trame sont tissés suivant une première armure de tissage de sorte à former une première portion (411) de la préforme de pied d'aube (410) de la structure fibreuse et une deuxième étape de tissage dans laquelle les fils de chaîne et les fils de trame sont tissés suivant une deuxième armure de tissage de sorte à former une deuxième portion (412) de la préforme de pied d'aube (410) de la structure fibreuse continue à la première portion (411) et située en aval de la première portion suivant la direction d'avancement de la structure fibreuse en sortie du métier à tisser, les fils de chaîne et les fils de trame présentant un taux d'entrelacement dans la première armure de tissage supérieur au taux d'entrelacement des fils de chaîne et les fils de trame présents dans la deuxième armure de tissage, le taux d'entrelacement correspondant au rapport du nombre de couches de fils traversées par les fils de chaîne et/ou les fils de trame par le produit du rapport d'armure, de l'espacement entre deux colonnes de trame et de l'espacement entre deux colonnes de chaîne.

2. Procédé selon la revendication 1, dans lequel les fils de chaîne et les fils de trame présents dans la première armure de tissage présentent un taux d'entrelacement supérieur ou égale à 1,5 fois le taux d'entrelacement des fils de chaîne et des fils de trame présents dans la deuxième armure de tissage.

3. Procédé selon la revendication 1 ou 2, dans lequel les première et deuxième armures sont du même type.

4. Procédé selon la revendication 1 ou 2, dans lequel les première et deuxième armures sont d'un type différent.

5. Procédé selon la revendications 3 ou 4, dans lequel le type des première et deuxième armures est choisi parmi un des types suivants : interlock, 3D orthogonal, multitoile ou multisergé ou multisatin.

6. Procédé selon l'une quelconque des revendications 1 à 5, dans lequel la première armure de tissage s'étend sur au moins 4 colonnes de fils de trames consécutives.

7. Procédé de fabrication d'une pièce en matériau composite comprenant les étapes suivantes:

    - réalisation d'une structure fibreuse (400) conformément au procédé de tissage d'une structure fibreuse selon l'une quelconque des revendications 1 à 6,
    - retrait de la première portion de la structure fibreuse,
    - mise en forme de la structure fibreuse pour former une préforme fibreuse de la pièce à fabriquer,
    - densification de la préforme fibreuse.

8. Structure fibreuse (400) destinée à former le renfort fibreux d'une aube de turbomachine en matériau composite comprenant un renfort fibreux densifié par une matrice, la structure fibreuse présentant un tissage tridimensionnel ou multicouche entre une pluralité de couches de fils de chaîne (201) et une pluralité de couches de fils de trame (202), la structure fibreuse comprenant une préforme de pied d'aube (410), **caractérisée en ce que** la préforme de pied d'aube (410) comprend au moins une première portion (411) présentant une première armure de tissage et une deuxième portion (412) continue à la première portion présentant une deuxième armure de tissage, les fils de chaîne et les fils de trame présentant un taux d'entrelacement dans la première armure de tissage supérieur au taux d'entrelacement des fils de chaîne et des fils de trame présents dans la deuxième armure de tissage, le taux d'entrelacement correspondant au rapport du nombre de couches de fils traversées par les fils de chaîne et/ou les fils de trame par le produit du rapport d'armure, de l'espacement entre deux colonnes de trame et de l'espacement entre deux colonnes de chaîne.

9. Structure fibreuse selon la revendication 8, dans laquelle les fils de chaîne et les fils de trame présents dans la première armure de tissage présentent un taux d'entrelacement supérieur ou égale à 1,5 fois le taux d'entrelacement des fils de chaîne et des fils de trame présents dans la deuxième armure de tissage.

10. Structure fibreuse selon la revendication 8 ou 9, dans laquelle les première et deuxième armures sont du même type.

11. Structure fibreuse selon la revendication 8 ou 9, dans laquelle les première et deuxième armures sont d'un type différent.

12. Structure fibreuse selon la revendications 10 ou 11, dans laquelle le type des première et deuxième armures est choisi parmi un des types suivants : interlock, 3D orthogonal, multitoile ou multisergé, ou multisatin.

13. Structure fibreuse selon l'une quelconque des revendications 8 à 12, dans laquelle la première armure de tissage s'étend sur au moins 4 colonnes de fils de trames consécutives.

**Patentansprüche**

1. Verfahren zum Weben eines Fasergebildes (400), das dazu bestimmt ist, die Faserverstärkung einer Schaufel für eine Turbomaschine aus Verbundmaterial zu bilden, das eine durch eine Matrix verdichtete Faserverstärkung umfasst, wobei das Fasergebilde in einem einzigen Stück in einer Webvorrichtung durch dreidimensionale oder mehrschichtige Verwebung zwischen mehreren Schichten von Kettfäden (201) und mehreren Schichten von Schussfäden (202) gewebt wird, wobei das Fasergebilde eine Vorform für einen Schaufelfuß (410) umfasst, **dadurch gekennzeichnet, dass** es zumindest einen ersten Webschritt umfasst, in welchem die Kettfäden und die Schussfäden gemäß einer ersten Gewebebindung auf solche Weise verwebt werden, dass sie einen ersten Teil (411) der Vorform des Schaufelfußes (410) des Fasergebildes bilden, und einen zweiten Webschritt, in welchem die Kettfäden und die Schussfäden gemäß einer zweiten Gewebebindung auf solche Weise verwebt werden, dass sie einen zweiten Teil (412) der Vorform des Schaufelfußes (410) des Fasergebildes bilden, der an ersten Teil (411) anschließt und sich dem ersten Teil entlang der Vorschubrichtung des Fasergebildes am Ausgang der Webvorrichtung nachgelagert befindet, wobei die Kettfäden und die Schussfäden einen Verflechtungsgrad in der ersten Gewebebindung aufweisen, der höher ist als der Verflechtungsgrad der Kettfäden und der Schussfäden, die in der zweiten Gewebebindung vorliegen, wobei der Verflechtungsgrad dem Verhältnis der Anzahl der Schichten von Fäden, die von den Kettfäden und/oder den Schussfäden durchzogen sind, durch das Produkt des Bindungsverhältnisses, des Abstands zwischen zwei Schuss-Kolonnen und des Abstands zwischen zwei Kett-Kolonnen entspricht.

2. Verfahren nach Anspruch 1, wobei die Kettfäden und die Schussfäden, die in der ersten Gewebebindung vorliegen, einen Verflechtungsgrad aufweisen, der höher als oder gleich dem 1,5-Fachen des Verflechtungsgrads der Kettfäden und der Schussfäden ist, die in der zweiten Gewebebindung vorliegen.

3. Verfahren nach Anspruch 1 oder 2, wobei die erste und die zweite Bindung vom selben Typ sind.

4. Verfahren nach Anspruch 1 oder 2, wobei die erste und die zweite Bindung von einem unterschiedlichen Typ sind.

5. Verfahren nach Anspruch 3 oder 4, wobei der Typ der ersten und zweiten Bindung aus den folgenden Typen ausgewählt ist: Interlock, 3D orthogonal, Mehrfach-Leinwand oder Mehrfach-Köper oder Mehrfach-Satin.

6. Verfahren nach einem der Ansprüche 1 bis 5, wobei die erste Gewebebindung sich über zumindest 4 aufeinanderfolgende Kolonnen von Schussfäden erstreckt.

7. Verfahren zur Herstellung eines Teils aus Verbundmaterial, umfassend die folgenden Schritte:

   - Verwirklichung eines Fasergebildes (400) in Übereinstimmung mit dem Verfahren zum Weben eines Fasergebildes nach einem der Ansprüche 1 bis 6,
   - Entfernen des ersten Teils des Fasergebildes,
   - Formung des Fasergebildes, um eine Faservorform des herzustellenden Teils zu bilden,
   - Verdichtung der Faservorform.

8. Fasergebilde (400), das dazu bestimmt ist, die Faserverstärkung einer Schaufel für eine Turbomaschine aus Verbundmaterial zu bilden, das eine durch eine Matrix verdichtete Faserverstärkung umfasst, wobei das Fasergebilde eine dreidimensionale oder mehrschichtige Verwebung zwischen mehreren Schichten von Kettfäden (201) und mehreren Schichten von Schussfäden (202) aufweist, wobei das Fasergebilde eine Vorform für einen Schaufelfuß (410) umfasst, **dadurch gekennzeichnet, dass** die Vorform des Schaufelfußes (410) zumindest einen ersten Teil (411), der eine erste Gewebebindung aufweist, und einen zweiten Teil (412) umfasst, der an den ersten Teil anschließt und eine zweite Gewebebindung aufweist, wobei die Kettfäden und die Schussfäden einen Verflechtungsgrad in der ersten Gewebebindung aufweisen, der höher ist als der Verflechtungsgrad der Kettfäden und der Schussfäden, die in der zweiten Gewebebindung vorliegen, wobei der Verflechtungsgrad dem Verhältnis der Anzahl der Schichten von Fäden, die von den Kettfäden und/oder den Schussfäden durchzogen sind, durch das Produkt des Bindungsverhältnisses, des Abstands zwischen zwei Schuss-Kolonnen und des Abstands zwischen zwei Kett-Kolonnen entspricht.

9. Fasergebilde nach Anspruch 8, wobei die Kettfäden und die Schussfäden, die in der ersten Gewebebindung vorliegen, einen Verflechtungsgrad aufweisen, der höher als oder gleich dem 1,5-Fachen des Verflechtungsgrads der Kettfäden und der Schussfäden ist, die in der zweiten Gewebebindung vorliegen.

10. Fasergebilde nach Anspruch 8 oder 9, wobei die erste und die zweite Bindung vom selben Typ sind.

11. Fasergebilde nach Anspruch 8 oder 9, wobei die erste und die zweite Bindung von einem unterschiedlichen Typ sind.

12. Fasergebilde nach Anspruch 10 oder 11, wobei der Typ der ersten und zweiten Bindung aus den folgenden Typen ausgewählt ist: Interlock, 3D orthogonal, Mehrfach-Leinwand oder Mehrfach-Köper oder Mehrfach-Satin.

13. Fasergebilde nach einem der Ansprüche 8 bis 12, wobei die erste Gewebebindung sich über zumindest 4 aufeinanderfolgende Kolonnen von Schussfäden erstreckt.

**Claims**

1. A method for weaving a fibrous structure (400) intended to form the fibrous reinforcement of a turbomachine blade made of composite material comprising a fibrous reinforcement densified by a matrix, the fibrous structure being woven as a single piece on a loom by three-dimensional or multilayer weaving between a plurality of warp yarn layers (201) and a plurality of weft yarn layers (202), the fibrous structure comprising a blade root preform (410), **characterised in that** it comprises at least one first weaving step in which the warp yarns and the weft yarns are woven according to a first type of weave so as to form a first portion (411) of the blade root preform (410) of the fibrous structure, and a second weaving step in which the warp yarns and the weft yarns are woven according to a second type of weave so as to form a second portion (412) of the blade root preform (410) of the fibrous structure continuing on from the first portion (411) and located downstream of the first portion in the direction of advance of the fibrous structure at the outlet of the loom, the warp yarns and the weft yarns having a degree of interweaving in the first type of weave greater than the degree of interweaving of the warp yarns and the weft yarns present in the second type of weave, the degree of interweaving corresponding to the ratio of the number of layers of yarns crossed by the warp yarns or the weft yarns divided by the product of the weave ratio, the spacing between two weft columns and the spacing between two warp columns.

2. The method according to claim 1, in which the warp yarns and the weft yarns present in the first type of weave have a degree of interweaving greater than or equal to 1.5 times the degree of interweaving of warp yarns and weft yarns present in the second type of weave.

3. The method according to claim 1 or 2, in which the first and second weaves are of the same type.

4. The method according to claim 1 or 2, in which the first and second weaves are of a different type.

5. The method according to claims 3 or 4, in which the type of the first and second weaves is chosen from one of the following types:

   interlock, 3D orthogonal, multilayer plain or multilayer twill or
   multilayer satin.

6. The method according to any one of claims 1 to 5, in which the first type of weave extends over at least 4 consecutive columns of weft yarns.

7. A method for manufacturing a part made of composite material comprising the following steps:

   - producing a fibrous structure (400) in accordance with the method for weaving a fibrous structure according to any one of claims 1 to 6,
   - removing the first portion of the fibrous structure,
   - shaping the fibrous structure in order to form a fibrous preform of the part to be manufactured,

   - densifying the fibrous preform.

8. A fibrous structure (400) intended to form the fibrous reinforcement of a turbomachine blade made of composite material comprising a fibrous reinforcement densified by a matrix, the fibrous structure having a three-dimensional or multilayer weave between a plurality of warp yarn layers (201) and a plurality of weft yarn layers (202), the fibrous structure comprising a blade root preform (410), **characterised in that** the blade root preform (410) comprises at least one first portion (411) having a first type of weave and a second portion (412) continuing on from the first portion and having a second type of weave, the warp yarns and the weft yarns having a degree of interweaving in the first type of weave greater than the degree of interweaving of warp yarns and weft yarns present in the second type of weave, the degree of interweaving corresponding to the ratio of the number of layers of yarns crossed by the warp yarns or the weft yarns divided by the product of the weave ratio, the spacing between two weft columns and the spacing between two warp columns.

9. The fibrous structure according to claim 8, in which the warp yarns and weft yarns present in the first type of weave have a degree of interweaving greater than or equal to 1.5 times the degree of interweaving of warp yarns and weft yarns present in the second type of weave.

10. The fibrous structure according to claim 8 or 9, in which the first and second weaves are of the same type.

11. The fibrous structure according to claim 8 or 9, in which the first and second weaves are of a different type

12. The fibrous structure according to claims 10 or 11, in which the type of the first and second weaves is chosen from one of the following types: interlock, 3D orthogonal, multilayer plain or multilayer twill or multilayer satin.

13. The fibrous structure according to any one of claims 8 to 12, in which the first type of weave extends over at least 4 consecutive columns of weft yarns.

[Fig. 1]

[Fig. 2]

[Fig. 3]

[Fig. 4]

**RÉFÉRENCES CITÉES DANS LA DESCRIPTION**

**Documents brevets cités dans la description**

- US 2005084377 A
- US 7101154 B
- US 7241112 B
- WO 2010061140 A